# EUROPÄISCHE PATENTANMELDUNG

(11) **EP 3 165 069 A1**
(43) Veröffentlichungstag der Anmeldung: **10.05.2017**
(21) Anmeldenummer: 16401086.0
(22) Anmeldetag: 02.11.2016
(51) Int. Cl.: A01C 17/00, A01C 21/00

(54) **ZENTRIFUGALSTREUER MIT VERBESSERTER FÜLLSTANDSBESTIMMUNG**

(30) Priorität: 06.11.2015 DE 102015119079
(71) Anmelder: Amazonen-Werke H. Dreyer GmbH & Co. KG, 49205 Hasbergen (DE)
(72) Erfinder: Dreyer, Justus, 49076 Osnabrück (DE); Johannaber, Stefan Jan, 49536 Lienen (DE); Kleine-Hartlage, Hubertus, 49186 Bad Iburg (DE); Rahe, Florian, 49504 Lotte (DE)

(57) **Zusammenfassung**

Die Erfindung umfasst einen Zentrifugalstreuer zum Ausbringen von Streugut, umfassend: einen Vorratsbehälter (1) für das auszubringende Streugut, eine Wiegeeinrichtung zum Bestimmen eines aktuellen Wertes der Streugutmenge im Vorratsbehälter (1), wenigstens eine Schleuderscheibe (5), der ein einstellbares Dosierorgan (4) zugeordnet ist, eine Sensoreinrichtung (15, 16) zum Bestimmen eines aktuellen Wertes des über das Dosierorgan (4) auf die Schleuderscheibe (5) auslaufenden Massenstroms, und eine Steuereinheit (18), die mit der Wiegeeinrichtung und der Sensoreinrichtung (15, 16) verbunden ist, wobei die Steuereinheit (18) derart ausgebildet ist, dass sie wenigstens einen aktuellen Wert der Streugutmenge im Vorratsbehälter (1) mit wenigstens einem aktuellen Wert des Massenstroms zum Bestimmen eines berechneten Wertes der Streugutmenge im Vorratsbehälter (1) und/oder des über das Dosierorgan (4) auf die Schleuderscheibe (5) auslaufenden Massenstroms kombiniert.

## Beschreibung

Die Erfindung betrifft einen Zentrifugalstreuer zum Ausbringen von Streugut, insbesondere einen Zentrifugaldüngersteuer zum Ausbringen von Dünger.

Bei derartigen Zentrifugalstreuern wird das sich in einem Vorratsbehälter befindliche Streugut über einstellbare Dosierorgane den Wurfschaufeln der Schleuderscheiben in einstellbaren Mengen zugeleitet.

Zur Überwachung und Regelung derartiger Zentrifugalstreuer wird häufig der Füllstand des Streuguts im Vorratsbehälter herangezogen. Dafür ist es bekannt, eine Wiegeeinrichtung vorzusehen, mit der ein aktueller Wert der Streugutmenge im Vorratsbehälter feststellbar ist. Solche Wiegeeinrichtungen haben jedoch den Nachteil, dass sie im Grunde nur im Stillstand der Maschine korrekte Messwerte liefern. Während des Betriebs des Zentrifugalstreuers wird die Messung durch Bodenunebenheiten oder andere Einflüsse des Streuers gestört. Diese Einflüsse rechnerisch zu kompensieren ist aufwendig.

Alternativ oder zusätzlich wird häufig ein aktueller Wert des über das Dosierorgan auf die Schleuderscheibe auslaufenden Massenstroms zur Regelung des Zentrifugalstreuers verwendet. Beispielsweise durch die EP 1 008 288 B1 ist es bekannt, den Antriebselementen der Schleuderscheiben eine Messvorrichtung zur Ermittlung des Antriebsdrehmomentes zuzuordnen. Basierend auf dem festgestellten Drehmoment kann ein Istwert des Massenstroms ermittelt werden. Durch Vergleich mit einem Sollwert kann eine Regelung der Dosierorgane stattfinden.

Auch die Messung des Massenstroms ist jedoch fehleranfällig. So kann beispielsweise Verschleiß dazu führen, dass die zur Ermittlung des Massenstroms aus dem Antriebsdrehmoment verwendete Kennlinie die tatsächlichen Verhältnisse nicht mehr korrekt wiederspiegelt. Bereits kleine Abweichungen in der Kennlinie von den tatsächlichen Verhältnissen können zu merkbaren Fehlern führen.

Der Erfindung liegt daher die Aufgabe zugrunde, einen Zentrifugalstreuer sowie ein Verfahren zum Betreiben eines Zentrifugalstreuers bereitzustellen, welche eine präzisere Bestimmung der zur Regelung erforderlichen Größen ermöglichen. Diese Aufgabe wird durch einen Zentrifugalstreuer gemäß Patentanspruch 1 sowie durch ein Verfahren gemäß Patentanspruch 8 gelöst. Weitere vorteilhafte Ausgestaltungen der Erfindung sind in den abhängigen Ansprüchen angegeben.

Gemäß der Erfindung ist es also vorgesehen, wenigstens einen aktuellen Wert der Streugutmenge im Vorratsbehälter, der über eine Wiegeeinrichtung bestimmt wurde, mit einem aktuellen Wert des Massenstroms, der über eine entsprechende Sensoreinrichtung bestimmt wurde, zu kombinieren und daraus einen berechneten Wert der Streugutmenge im Vorratsbehälter und/oder einen berechneten Wert des über das Dosierorgan auf die Schleuderscheibe auslaufenden Massenstroms zu bestimmen. Diese berechneten Werte können dann zur Regelung des Zentrifugalstreuers herangezogen werden. Durch die Kombination der Werte ist es nämlich möglich, Fehler der einen Messung durch Ergebnisse der entsprechenden anderen Messung zu kompensieren. Dem liegt insbesondere die Erkenntnis zugrunde, dass die Streugutmenge im Vorratsbehälter (Füllstand) mit dem Massenstrom in Beziehung steht. Durch Integration des Massenflusses kann eine Füllstandsänderung bestimmt werden. Umgekehrt kann über die zeitliche Änderung des Füllstandes der Massenstrom berechnet werden. Durch eine entsprechende Kombination können also Werte berechnet werden, welche eine höhere Präzision aufweisen.

Bei dem Zentrifugalstreuer kann es sich insbesondere um einen landwirtschaftlichen Düngerstreuer handeln. Bei dem Streugut handelt es sich in diesem Fall um einen, insbesondere granulären, Dünger.

Erfindungsgemäß ist eine Schleuderscheibe vorgesehen. Es ist jedoch auch möglich zwei oder mehr Schleuderscheiben bereitzustellen.

Die wenigstens eine Schleuderscheibe kann insbesondere unterhalb des Vorratsbehälters angeordnet sein. Die wenigstens eine Schleuderscheibe kann um eine aufrechte Achse mittels einer Antriebswelle rotierend antreibbar sein.

Auf der wenigstens einen Schleuderscheibe kann wenigstens eine Wurfschaufel angeordnet sein. Es können verschieden ausgebildete Wurfschaufel- oder Schleuderscheibensätze zur Anpassung an verschiedene Arbeitsbreiten- und Streubreitenbereiche zum Einsatz kommen. Insbesondere zum Bearbeiten der äußeren Fahrgasse, also zum Grenzstreuen, können an der Schleuderscheibe eine oder mehrere Grenzstreuschaufeln vorgesehen sein, deren Position, insbesondere deren Winkelanstellung, einstellbar ist. Dadurch kann sichergestellt werden, dass das Streubild zur Feldgrenze hin so angepasst werden kann, dass kein oder im wesentlichen kein Streugut über die Feldgrenze gelangt.

Die Wiegeeinrichtung kann mehrere Wiegesensoren umfassen. Über die Wiegeeinrichtung kann ein aktueller Wert der Streugutmenge im Vorratsbehälter in Form einer Masse des Streuguts im Vorratsbehälter bestimmt werden.

Zum Bestimmen des aktuellen Werts des über das Dosierorgan auf die Schleuderscheibe auslaufenden Massenstroms kann die Sensoreinrichtung als Drehmomentmesseinrichtung zur Messung des Antriebsdrehmoments der Schleuderscheibe ausgebildet sein. Das erforderliche Drehmoment zum Antrieb der Schleuderscheibe kann als Maß für die Ausbringmenge und damit für den Massenstrom angesehen werden. Wenn das Drehmoment beispielsweise abfällt, kann dies ein Hinweis darauf sein, dass die eingestellte Ausbringmenge nicht ausgebracht wird. Auch andere Sensoreinrichtungen sind jedoch möglich.

In der Steuereinheit kann dafür ein entsprechendes Expertenprogramm hinterlegt sein, welches aus den Drehmomentwerten den entsprechenden Massenstrom ermittelt. Dafür können insbesondere eine oder mehrere Kennlinien hinterlegt sein, welche den Zusammenhang zwischen Drehmoment und Massenstrom repräsentieren.

Zur Bestimmung des Massenstroms können insbesondere auch das Leerlaufdrehmoment und/oder die Drehzahl der Schleuderscheibe berücksichtigt werden.

Die Steuereinheit kann so ausgebildet sein, dass sie einen Soll-Massenstrom basierend auf der Fahrgeschwindigkeit des Zentrifugalstreuers bzw. des den Zentrifugalstreuer tragenden oder ziehenden Schleppers, der Sollstreumenge pro Fläche und der Arbeitsbreite errechnet. Die erforderlichen Größen können in die Steuereinheit eingebbar, über entsprechende Sensoren bestimmbar oder in einem Speicherelement hinterlegt sein. Insbesondere die Fahrgeschwindigkeit kann über einen entsprechenden Geschwindigkeitssensor bestimmbar sein. Die Steuereinheit kann so ausgebildet sein, dass sie den Soll-Massenstrom aktualisiert, wenn sich einer der Parameter, insbesondere die Fahrgeschwindigkeit, ändert.

Bei der Steuereinheit kann es sich um eine elektronische Regel und Auswerteeinheit handeln. Diese kann insbesondere über entsprechende drahtlose oder drahtgebundene Verbindungen mit der Wiegeeinrichtung und der Sensoreinrichtung verbunden sein.

Das einstellbare Dosierorgan kann insbesondere einen Schieber umfassen, durch den eine Auslauföffnung des Vorratsbehälters in ihrer Öffnungsweite einstellbar und verschließbar ist. Der Schieber kann mittels eines zugeordneten motorischen Einstellmittels betätigtbar sein, wobei das Einstellmittel wiederum über die Steuereinheit betätigbar ist.

Die Steuereinheit kann insbesondere so ausgebildet sein, dass sie eine Einstellung des Dosierorgans basierend auf dem berechneten Wert der Streugutmenge im Vorratsbehälter und/oder dem berechneten Wert des Massenstroms regelt. Dadurch kann die Regelung des Zentrifugalstreuers verbessert werden, da der Regelung eine präzisere Stellgröße zugrunde gelegt wird.

Beispielsweise kann basierend auf dem berechneten Wert der Streugutmenge im Vorratsbehälter eine Änderung des Füllstandes bestimmt werden. Aus dieser Änderung des Füllstandes kann auf den Massenstrom geschlossen werden, der dann verwendet werden kann, um eine Einstellung des Dosierorgans zu regeln, insbesondere nach Abgleich mit dem Soll-Massenstrom.

Bei der Einstellung des Dosierorgans kann es sich insbesondere um die Position des Schiebers, insbesondere in Bezug auf die Auslauföffnung, handeln. Die oben genannte Einstellung des Dosierorgans kann alternativ oder zusätzlich auch dem Aufgabepunkt des Streuguts auf der Schleuderscheibe entsprechen. Auch für die Einstellung des Aufgabepunktes kann ein entsprechendes Stellmittel vorgesehen sein, das über die Steuereinheit betätigbar ist.

Anstelle der Bestimmung des Massenstroms über eine Änderung des Füllstands kann auch direkt auf den berechneten Wert des Massenstroms zurückgegriffen werden.

Die Steuereinheit kann auch so ausgebildet sein, dass sie kontinuierlich oder in vorherbestimmten Zeitintervallen wenigstens einen aktuellen Wert der Streugutmenge im Vorratsbehälter mit wenigstens einem aktuellen Wert des Massenstroms kombiniert zum Bestimmen eines berechneten Wertes der Streugutmenge im Vorratsbehälter und/oder des über das Dosierorgan auf die Schleuderscheibe auslaufenden Massenstroms. Die berechneten Werte können dann in einem flüchtigen oder nicht flüchtigen Speicher abgelegt werden. Dadurch können die berechneten Werte für die Regelung des Zentrifugalstreuers bereitstehen. Insbesondere kann durch mehrere abgelegte berechnete Werte der Streugutmenge im Vorratsbehälter die Mengenänderung (Füllstandsänderung) errechnet werden, auf Basis derer der Massenstrom bestimmbar ist. Umgekehrt kann durch Aufsummierung der berechneten Massenströme der Füllstand oder Füllstandsänderungen bestimmt werden.

Wenn mehr als eine Schleuderscheibe vorgesehen ist, können die aktuellen Werte des Massenstroms aller Schleuderscheiben mit dem aktuellen Wert der Streugutmenge im Vorratsbehälter kombiniert werden. In diesem Fall kann der berechnete Wert des Massenstroms einem Gesamtmassenstrom entsprechen, der auf alle Schleuderscheiben aus dem Vorratsbehälter ausläuft. Alternativ oder zusätzlich kann ein berechneter Wert des auslaufenden Massenstroms für jede Schleuderscheibe bestimmt werden.

Die Steuereinheit kann so ausgebildet sein, dass sie die aktuellen Werte über einen Algorithmus kombiniert, wobei der Algorithmus die physikalischen Zusammenhänge der aktuellen Werte und Gewichtungsfaktoren bezüglich der Exaktheit oder Genauigkeit der aktuellen Werte berücksichtigt. Dadurch ist eine besonders zuverlässige Bestimmung der berechneten Werte möglich.

Für den Algorithmus können also die Genauigkeit bzw. Exaktheit der jeweiligen aktuellen Werte als Parameter angegeben werden. Diese Parameter bilden gewissermaßen Gewichtungsfaktoren, mit denen der aktuelle Wert der Streugutmenge bzw. der aktuelle Wert des Massenstroms berücksichtigt wird. Durch Veränderung dieser Parameter oder Gewichtungsfaktoren kann somit beeinflusst werden, welchem aktuellen Wert ein höheres statistisches Gewicht gegeben wird.

Die aktuellen Werte können außerdem hinsichtlich ihrer physikalischen Zusammenhänge durch den Algorithmus berücksichtigt werden. So kann der Algorithmus beispielsweise die zeitliche Ableitung der Streugutmenge und den über die Sensoreinrichtung bestimmten Massenstrom berücksichtigen. Alternativ kann die Streugutmenge und die Integration des Massenstroms berücksichtigt werden. Der Algorithmus kann außerdem die Drehzahl der Schleuderscheibe und/oder die Neigung des Zentrifugalstreuers und/oder eine Beschleunigung des Zentrifugalstreuers und/oder eine Einstellung des wenigstens einen Dosierorgans berücksichtigen.

Die Steuereinheit kann entsprechend derart ausgebildet sein, dass sie die vom Algorithmus verwendeten Gewichtungsfaktoren abhängig vom Betrieb des Zentrifugalstreuers anpasst oder verändert oder aktualisiert. Dadurch kann entsprechend des Betriebs des Zentrifugalstreuers veränderten Genauigkeiten der aktuellen Werte der einzelnen Größen Rechnung getragen werden.

"Abhängig vom Betrieb des Zentrifugalstreuers" kann insbesondere abhängig von einem oder mehreren Betriebsparametern und/oder abhängig von einem Betriebsmodus des Zentrifugalstreuers bedeuten. Betriebsparameter des Zentrifugalstreuers können beispielsweise Geschwindigkeit, Neigung und/oder Position des Zentrifugalstreuers sein. Bei den Betriebsmodi des Zentrifugalstreuers kann beispielsweise zwischen einem Grenzstreumodus, bei dem eine äußere Fahrgasse des zu bearbeitenden Feldes bearbeitet wird, und einem Normalstreumodus, bei dem ein Bereich im Inneren des Feldes bearbeitet wird, unterschieden werden.

Die Steuereinheit kann also insbesondere so ausgebildet sein, dass sie die von dem Algorithmus verwendeten Gewichtungsfaktoren abhängig von der Drehzahl der Schleuderscheibe und/oder der Neigung des Zentrifugalstreuers und/oder einer Beschleunigung des Zentrifugalstreuers und/oder einer Einstellung des wenigstens einen Dosierorgans anpasst.

Zur Bestimmung der Betriebsparameter oder des Betriebsmodus kann der Zentrifugalstreuer weitere Sensoren umfassen, beispielsweise einen Geschwindigkeitssensor und/oder einen Neigungssensor und/oder einen Beschleunigungssensor und/oder einen Drehzahlsensor der Schleuderscheibe.

Bei der Einstellung des wenigstens einen Dosierorgans, die für die Anpassung der Gewichtungsfaktoren berücksichtigt werden kann, kann es sich insbesondere um die Position des Schiebers und/oder des Aufgabepunkts des Streuguts auf die Schleuderscheibe handeln.

Der Zentrifugalstreuer kann außerdem ein Förderband umfassen, mit welchem das Streugut dem Dosierorgan zugeführt wird. In diesem Fall kann der Algorithmus auch die Bandgeschwindigkeit und/oder die Schieberöffnung beim Bandboden, also am Übergang zum Dosierorgan berücksichtigen.

Der Algorithmus zur Kombination der aktuellen Werte kann insbesondere einen Kalman-Filter umfassen oder einem solchen entsprechen. Dadurch können besonders vorteilhafte Ergebnisse erzielt werden. Auch andere digitale Filter sind jedoch prinzipiell möglich.

Wenn das Bestimmen eines aktuellen Wertes des über das Dosierorgan auf die Schleuderscheibe auslaufenden Massenstroms auf wenigstens einer Kennlinie beruht, die eine Beziehung zwischen den von der Sensoreinrichtung gemessenen Messwerten und dem Massenstrom herstellt, kann die Steuereinheit insbesondere so ausgebildet sein, dass die Kennlinie basierend auf einem oder mehreren berechneten Werten der Streugutmenge im Vorratsbehälter und/oder des Massenstroms korrigierbar ist. Dadurch kann die Genauigkeit des aktuellen Wertes des Massenstroms erhöht werden. Dies kann wiederum dazu führen, dass der Algorithmus zur Kombination der aktuellen Werte schneller konvergiert. Dadurch kann letztlich also auch die Recheneffizienz erhöht werden.

Allgemein können Korrekturparameter, die im Algorithmus, insbesondere im Kalman-Filter, verwendet werden, zur Korrektur der Bestimmung der aktuellen Werte über die Wiegeeinrichtung bzw. die Sensoreinrichtung durch die Steuereinheit verwendbar sein. Dazu können basierend auf den Korrekturparametern beispielsweise ein oder mehrere Korrekturfaktoren berechnet oder bestimmt und in einem Speicherelement hinterlegt werden. Der oder die Korrekturfaktoren können wiederum zur Korrektur der genannten Kennlinie oder Kennlinien verwendet werden.

Die Verfahrensschritte des erfindungsgemäßen Verfahrens nach Anspruch 8 können insbesondere durch eine oben beschriebene Steuereinheit durchgeführt werden. Die Steuereinheit kann dabei eines oder mehrere der oben genannten Merkmale aufweisen. Der Zentrifugalstreuer und die entsprechenden Elemente des Zentrifugalstreuers können ebenso eines oder mehrere der oben genannten Merkmale aufweisen. Gemäß dem Verfahren kann die Steuereinheit einen oder mehrere der Schritte durchführen, für deren Durchführung sie zuvor als ausgebildet beschrieben wurde.

Insbesondere kann das Verfahren außerdem ein Regeln einer Einstellung des Dosierorgans basierend auf dem berechneten Wert der Streugutmenge im Vorratsbehälter und/oder dem berechneten Wert des Massenstroms umfassen.

Außerdem kann das Verfahren ein Korrigieren der Kennlinie basierend auf einem oder mehreren berechneten Werten der Streugutmenge im Vorratsbehälter und/oder des Massenstroms umfassen, wenn das Bestimmen eines aktuellen Wertes des über das Dosierorgan auf die Schleuderscheibe auslaufenden Massenstroms auf wenigstens einer Kennlinie beruht, die eine Beziehung zwischen den von der Sensoreinrichtung gemessenen Messwerten und dem Massenstrom herstellt.

Weitere Merkmale und Vorteile der Erfindung werden nachfolgend anhand der beispielhaften Figur erläutert. Dabei zeigt:

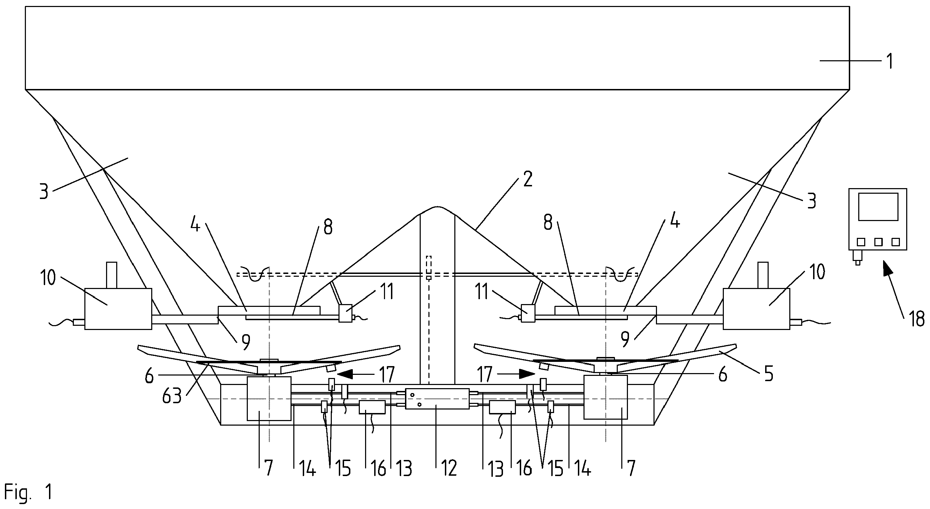

- Fig. 1: einen beispielhaften Zentrifugalstreuer in einer Ansicht von hinten und in Prinzipdarstellung.

Der beispielhafte Zentrifugalstreuer gemäß Fig. 1 ist ein landwirtschaftlicher Schleuderdüngerstreuer. Dieser weist einen Vorratsbehälter 1 für den auszubringenden Dünger auf. Der Vorratsbehälter 1 weist in seinem unteren Bereich zwei durch ein dachförmiges Mittelteil 2 voneinander getrennte Auslauftrichter 3 auf.

Die Auslauftrichter 3 sind jeweils durch ein Dosierorgan 4 abgeschlossen, über die der Dünger in einstellbaren Mengen den darunter angeordneten Schleuderscheiben 5 zugeführt wird. Jede Schleuderscheibe 5 wird über eine Schleuderscheibenwelle 6 und einen Hydraulikmotor 7 angetrieben. Es versteht sich, dass der Antrieb über einen Hydraulikmotor nur als Beispiel dient und andere Antriebe, beispielsweise ein mechanischer oder elektrischer Antrieb ebenfalls möglich sind. Auf den Schleuderscheiben 5 sind Wurfschaufeln angeordnet, welche das ihnen zugeleitete Streugut in Breitenverteilung auf der Bodenoberfläche verteilen. Die Wurfschaufeln können in ihrer Position veränderbar sein. Die Wurfschaufeln können insbesondere in Scheibenebene mit unterschiedlichen Winkeln zur Radialen eingestellt werden. Durch die unterschiedliche Winkelanstellung der Wurfschaufeln kann für unterschiedliche Materialsorten und Arbeitsbreiten eine gleichmäßige Düngerverteilung erzielt werden.

Die Schleuderscheiben 5 bzw. die Dosierorgane 4 sind jeweils zueinander verstellbar, sodass die Lage des Aufgabepunktes des Düngers auf die jeweilige Schleuderscheibe 5 veränderbar ist.

Die Dosierorgane 4 weisen jeweils eine Bodenplatte 8 auf, durch welche die untere Öffnung der Auslauftrichter 3 abgeschlossen wird. In der Bodenplatte 8 sind Auslauföffnungen angeordnet, deren Öffnungsweite durch Schieber 9 einstellbar ist. Die Schieber 9 können durch motorische Einstellmittel 10 betätigt werden. Die ebenfalls in Fig. 1 dargestellten motorischen Einstellmittel 11 sind zur Einstellung des Aufgabepunktes vorgesehen.

Die Hydraulikmotoren 7 werden über geeignete Einrichtungen, beispielsweise von der Hydraulikanlage des Schleppers oder einer Hydraulikpumpe, die von dem Schlepper oder mit anderen Mitteln motorisch angetrieben wird, angetrieben. Den Hydraulikmotoren 7 ist eine Regeleinrichtung 12 zugeordnet, mittels welcher die Drehzahl der Schleuderscheiben 5 gemeinsam oder unabhängig voneinander einstellbar sind.

Von der als Regelventil ausgebildeten Regeleinrichtung 12 führt jeweils eine Drucklaufleitung 13 und eine Rücklaufleitung 14 zu dem jeweiligen Hydraulikmotor 7. In der Drucklaufleitung 13 und in der Rücklaufleitung 14 sind jeweils Druckmessgeräte 15 angeordnet. Über die Werte dieser Druckmessgeräte 15 lässt sich in Verbindung mit dem Messwert eines Durchflussmessgeräts 16 das Drehmoment ermitteln. Somit bilden die Druckmessgeräte 15 in Verbindung mit dem Durchflussmessgerät 16 einen Drehmomentsensor. In dem Antrieb der Schleuderscheiben 5 ist also ein Drehmomentsensor in Form der Geräte 15 und 16 angeordnet. Außerdem ist den Schleuderscheiben 5 bzw. deren Antriebswelle 6 jeweils ein Drehzahlsensor 17 zugeordnet, mittels welchem die Drehzahl messbar ist.

Schließlich ist noch eine Steuereinheit in Form einer elektronischen Regel- und Auswerteeinheit 18 vorgesehen. Diese Steuereinheit 18 ist über Leitungen mit den einzelnen Sensoren 15, 16, 17 verbunden, sodass die von den Sensoren 15, 16, 17 ermittelten Werte in die Steuereinheit 18 übertragbar sind.

Über die Steuereinheit 18 ist auch eine Einstellung der Dosierorgane möglich, insbesondere eine Einstellung der Position des Schiebers 9 bzw. des Aufgabepunktes. Dafür ist die Steuereinheit 18 entsprechend mit den Einstellmitteln 10, 11 verbunden. Auch die Drehzahl der Schleuderscheiben 5 kann über die Steuereinheit 18 eingestellt werden.

Die Steuereinheit ist so ausgebildet, dass sie aus Werten der Sensoren 15, 16 ein Drehmoment bestimmen kann. Das erforderliche Drehmoment, um die Schleuderscheiben anzutreiben, um den Dünger in Breitenverteilung auf der Bodenoberfläche zu verteilen, ist ein Maß für die Ausbringmenge, also den Ist-Massenstrom. In der Steuereinheit 18 ist ein entsprechendes Expertenprogramm hinterlegt, welches die Zusammenhänge zwischen den Drehmomentwerten und dem Massenstrom ermittelt. Dafür können insbesondere eine oder mehrere Kennlinien hinterlegt sein, welche die Zusammenhänge repräsentieren. Hierbei können unterschiedliche Kennlinien für unterschiedliche Einstellungen der Schleuderscheiben und/oder für unterschiedliche Schleuderscheiben verwendet werden.

Die Steuereinheit 18 kann so also einen aktuellen Wert des über die Dosierorgane 4 auf die Schleuderscheiben 5 auslaufenden Massenstroms bestimmen.

Über eine nicht dargestellte Wiegeeinrichtung kann die Steuereinheit 18 außerdem einen aktuellen Wert der Streugutmenge im Vorratsbehälter 1 bestimmen.

Die Steuereinheit 18 ist dann so ausgebildet, dass sie wenigstens einen aktuellen Wert der Streugutmenge im Vorratsbehälter 1 mit wenigstens einem aktuellen Wert des Massenstroms kombiniert, und dadurch einen berechneten Wert der Streugutmenge im Vorratsbehälter 1 und/oder einen berechneten Wert des über die Dosierorgane 4 auf die Schleuderscheiben 5 auslaufenden Massenstroms bestimmt.

Diese Kombination kann insbesondere über einen Algorithmus durchgeführt werden, der die physikalischen Zusammenhänge der aktuellen Werte berücksichtigt und außerdem Gewichtungsfaktoren bezüglich der Exaktheit der aktuellen Werte verwendet.

Bei dem Algorithmus kann es sich beispielsweise um einen Kalman-Filter handeln. Ein Kalman-Filter ist ein Filter oder Algorithmus zur Zustandsschätzung linearer und nichtlinearer Systeme. Die Basis dieses Filters kann ein physikalisches Modell des Vorratsbehälters (1) bilden, wobei der Füllstand sowie die Änderung des Füllstands (der Massenstrom) in dem Modell berücksichtigt werden. Die Änderung des Füllstands entspricht insbesondere der Ableitung des Füllstands nach der Zeit.

Der Algorithmus kann außerdem die Drehzahl der Schleuderscheibe und/oder die Neigung des Zentrifugalstreuers und/oder eine Beschleunigung des Zentrifugalstreuers und/oder eine Einstellung des wenigstens einen Dosierorgans berücksichtigen.

Je nach Neigung können beispielsweise unterschiedliche Gewichtungen sinnvoll sein. Bei einer starken Neigung des Zentrifugalstreuers kann beispielsweise der Füllstand, der über die Wiegeeinrichtung bestimmt wird, stark schwanken und unzuverlässig sein. In diesem Fall kann ein höheres Gewicht auf die Massenstrommessung gelegt werden. Auch bei höherer Geschwindigkeit kann mit größeren Schwankungen der Werte der Wiegeeinrichtung gerechnet werden, so dass eine Anpassung der Gewichtungsfaktoren angezeigt sein kann.

Auch andere Elemente des Zentrifugalstreuers können durch den Algorithmus berücksichtigt werden.

Die Steuereinheit 18 kann so ausgebildet sein, dass sie eine Einstellung der Dosierorgane basierend auf dem berechneten Wert der Streugutmenge im Vorratsbehälter 1 und/oder dem berechneten Wert des Massenstroms regelt. Insbesondere kann derart die Position der Schieber 9 und/oder der Aufgabepunkt geregelt werden.

Wie bereits erwähnt, ist die Erfindung nicht auf hydraulisch angetriebene Schleuderscheiben begrenzt, sondern es sind auch andere Antriebe denkbar. Entsprechend dem gewählten Antrieb kann dann ein geeigneter Drehmomentsensor gewählt werden. Auch andere Sensoren, mit denen ein Ist-Massenstrom feststellbar ist, können alternativ oder zusätzlich zu den Drehmomentsensoren Einsatz finden.

Obwohl hier ein Zweischeibenstreuer gezeigt ist, können auch nur eine oder mehr als zwei Scheiben vorgesehen sein.

Der in Fig. 1 gezeigte Zentrifugalstreuer ist als Anbaugerät für einen Schlepper ausgebildet. Es wäre aber auch möglich, den Zentrifugalstreuer als Nachläufer oder sogar selbstfahrend auszubilden.

Es versteht sich außerdem, dass die in dem zuvor beschriebenen Ausführungsbeispiel genannten Merkmale nicht auf diese speziellen Kombinationen beschränkt sind und auch in beliebigen anderen Kombinationen möglich sind.

## Patentansprüche

1. Zentrifugalstreuer zum Ausbringen von Streugut, umfassend:
einen Vorratsbehälter (1) für das auszubringende Streugut;
eine Wiegeeinrichtung zum Bestimmen eines aktuellen Wertes der Streugutmenge im Vorratsbehälter (1);
wenigstens eine Schleuderscheibe (5), der ein einstellbares Dosierorgan (4) zugeordnet ist;
eine Sensoreinrichtung (15, 16) zum Bestimmen eines aktuellen Wertes des über das Dosierorgan (4) auf die Schleuderscheibe (5) auslaufenden Massenstroms; und
eine Steuereinheit (18), die mit der Wiegeeinrichtung und der Sensoreinrichtung (15, 16) verbunden ist;
wobei die Steuereinheit (18) derart ausgebildet ist, dass sie wenigstens einen aktuellen Wert der Streugutmenge im Vorratsbehälter (1) mit wenigstens einem aktuellen Wert des Massenstroms zum Bestimmen eines berechneten Wertes der Streugutmenge im Vorratsbehälter (1) und/oder des über das Dosierorgan (4) auf die Schleuderscheibe (5) auslaufenden Massenstroms kombiniert.

2. Zentrifugalstreuer nach Anspruch 1, wobei die Steuereinheit (18) so ausgebildet ist, dass sie eine Einstellung des Dosierorgans (4) basierend auf dem berechneten Wert der Streugutmenge im Vorratsbehälter (1) und/oder dem berechneten Wert des Massenstroms regelt.

3. Zentrifugalstreuer nach Anspruch 1 oder 2, wobei die Steuereinheit (18) so ausgebildet ist, dass sie die aktuellen Werte über einen Algorithmus kombiniert, wobei der Algorithmus die physikalischen Zusammenhänge der aktuellen Werte und Gewichtungsfaktoren bezüglich der Exaktheit der aktuellen Werte berücksichtigt.

4. Zentrifugalstreuer nach Anspruch 3, wobei die Steuereinheit (18) so ausgebildet ist, dass sie die von dem Algorithmus verwendeten Gewichtungsfaktoren abhängig vom Betrieb des Zentrifugalstreuers anpasst.

5. Zentrifugalstreuer nach Anspruch 4, wobei die Steuereinheit (18) so ausgebildet ist, dass sie die von dem Algorithmus verwendeten Gewichtungsfaktoren abhängig von der Drehzahl der Schleuderscheibe (5) und/oder der Neigung des Zentrifugalstreuers und/oder einer Beschleunigung des Zentrifugalstreuers und/oder einer Einstellung des Dosierorgans (4) anpasst.

6. Zentrifugalstreuer nach einem der Ansprüche 3 bis 5, wobei der Algorithmus zur Kombination der aktuellen Werte einen Kalman-Filter umfasst.

7. Zentrifugalstreuer nach einem der vorangegangenen Ansprüche, wobei das Bestimmen eines aktuellen Wertes des über das Dosierorgan (4) auf die Schleuderscheibe (5) auslaufenden Massenstroms auf wenigstens einer Kennlinie beruht, die eine Beziehung zwischen den von der Sensoreinrichtung (15, 16) gemessenen Messwerten und dem Massenstrom herstellt, und wobei die Steuereinheit so (18) ausgebildet ist, dass die Kennlinie basierend auf einem oder mehreren berechneten Werten der Streugutmenge im Vorratsbehälter (1) und/oder des Massenstroms korrigierbar ist.

8. Verfahren zum Betreiben eines Zentrifugalstreuers, der einen Vorratsbehälter (1) für das auszubringende Streugut, eine Wiegeeinrichtung zum Bestimmen eines aktuellen Wertes der Streugutmenge im Vorratsbehälter (1), wenigstens eine Schleuderscheibe (5), der ein einstellbares Dosierorgan (4) zugeordnet ist, eine Sensoreinrichtung (15, 16) zum Bestimmen eines aktuellen Wertes des über das Dosierorgan (4) auf die Schleuderscheibe (5) auslaufenden Massenstroms, und eine Steuereinheit (18), die mit der Wiegeeinrichtung und der Sensoreinrichtung (15, 16) verbunden ist, umfasst, das Verfahren umfassend die Schritte:
Bestimmen wenigstens eines aktuellen Wertes der Streugutmenge im Vorratsbehälter (1) mittels der Wiegeeinrichtung;
Bestimmen wenigstens eines aktuellen Wertes des über das Dosierorgan (4) auf die Schleuderscheibe (5) auslaufenden Massenstroms mittels der Sensoreinrichtung (15, 16); und
Kombinieren des wenigstens einen aktuellen Wertes der Streugutmenge im Vorratsbehälter (1) mit dem wenigstens einen aktuellen Wert des Massenstroms zum Bestimmen eines berechneten Wertes der Streugutmenge im Vorratsbehälter (1) und/oder des über das Dosierorgan (4) auf die Schleuderscheibe (5) auslaufenden Massenstroms.

9. Verfahren nach Anspruch 8, **dadurch gekennzeichnet, dass** das Kombinieren des wenigstens einen aktuellen Wertes der Streugutmenge im Vorratsbehälter (1) mit dem wenigstens einen aktuellen Wert des Massenstroms zum Bestimmen eines berechneten Wertes der Streugutmenge im Vorratsbehälter (1) und/oder des über das Dosierorgan (4) auf die Schleuderscheibe (5) auslaufenden Massenstroms mittels eine Kalman-Filters vorgenommen wird.

10. Verfahren nach Anspruch 8 oder 9, außerdem umfassend Regeln einer Einstellung des Dosierorgans (4) basierend auf dem berechneten Wert der Streugutmenge im Vorratsbehälter (1) und/oder dem berechneten Wert des Massenstroms.

11. Verfahren nach zumindest einem der Ansprüche 8 bis 10, wobei das Bestimmen eines aktuellen Wertes des über das Dosierorgan (4) auf die Schleuderscheibe (5) auslaufenden Massenstroms auf wenigstens einer Kennlinie beruht, die eine Beziehung zwischen den von der Sensoreinrichtung (15, 16) gemessenen Messwerten und dem Massenstrom herstellt, und wobei das Verfahren außerdem umfasst:
Korrigieren der Kennlinie basierend auf einem oder mehreren berechneten Werten der Streugutmenge im Vorratsbehälter (1) und/oder des Massenstroms.
